Europäisches Patentamt

European Patent Office

Office européen des brevets

(19)

(11) Publication number: **0 122 781**
A1

(12) # EUROPEAN PATENT APPLICATION

(21) Application number: 84302511.5

(22) Date of filing: 12.04.84

(51) Int. Cl.³: **C 09 D 5/08**
C 23 F 11/18, C 23 F 15/00
C 09 D 7/12, C 10 L 1/28
C 09 K 15/02

(30) Priority: 16.04.83 GB 8310366

(43) Date of publication of application:
24.10.84 Bulletin 84/43

(84) Designated Contracting States:
BE DE FR GB IT NL SE

(71) Applicant: Verdugt b.v.
Papesteeg 91
NL-4006 WC Tiel(NL)

(72) Inventor: Van Ooyen, Johannes Adrianus Cornelis
Baronie 7
Asperen(NL)

(74) Representative: Krishnan, Suryanarayana
Kalyana et al,
c/o The British Petroleum Company plc Patents Division
Chertsey Road
Sunbury-on-Thames Middlesex TW16 7LN(GB)

(54) Corrosion inhibitors, methods of producing them and protective coatings containing them.

(57) This invention relates to a method of producing corrosion inhibitors comprising metal oxides and containing metal ions which are suitable for use in protective coatings, e.g. paints. An aqueous suspension of an active metal oxide e.g. silica is reacted under continuous agitation with a source of corrosion inhibiting cations e.g. calcium, whilst maintaining the reaction temperature below 15°C and the pH of the reaction from 7 to 9. The ion-exchanged metal oxide is then recovered, washed and spray-dried.

EP 0 122 781 A1

1

CORROSION INHIBITORS, METHODS OF PRODUCING
THEM AND PROTECTIVE COATINGS CONTAINING THEM

The present invention relates to a method of producing corrosion inhibitors comprising metal oxides and containing metal ions which are suitable for use in protective coatings, eg paints.

It is known that certain metal cations, eg calcium and zinc have corrosion inhibiting properties and that inorganic oxides e.g. silica or alumina containing these cations can be included in protective coatings. Such corrosion inhibitors, their methods of preparation and use are claimed and described in published European patent application No 0046057.

This publication states that the corrosion inhibitor comprises particles of an inorganic oxide which is silica or alumina having corrosion inhibiting cations, such as calcium or zinc cations, chemically bound to the particles. Suitable silicas specified for use in the ion-exchange process have a BSS mesh size in the range 8-16 (corresponding to particle diameters of about 1000 to 2000 microns) in one case and a BSS mesh size of 60-120 (corresponding to particle diameters of about 125 to 250 microns) in another case. Gasil 200 (particle size 4.5 microns) is also specified as a suitable inorganic oxide.

The ion-exchange is carried out by stirring the inorganic oxide in water at ambient temperature and the substance to be exchanged, such as calcium hydroxide, is added slowly while not allowing the pH to rise above 10.5 for silica or 12 for alumina. When exchange is complete the silica or alumina can be washed and dried under vacuum prior to being incorporated in a protective coating.

1

When used in protective coatings the particles should be suitably small so as to remain in suspension in the composition before application and so as not to substantially affect the ease of application or the smoothness of the dry coating. Suitable particle sizes may be up to 25 microns and are preferably less than 20 microns. If the particles are initially of larger size they have to be milled after ion exchange, but a convenient alternative method of preparation would be to use inorganic oxide particles which already have the preferred small size, thereby avoiding a milling step.

Accordingly, the present invention is a method of producing ion-exchanged metal oxides said process comprising reacting with agitation an aqueous suspension of a metal oxide selected from silica and alumina having surface hydroxyl groups and an average particle diameter of less than 25 microns with a source of corrosion inhibiting cations and recovering the ion-exchanged metal oxide characterised in that the reaction is carried out at or below 15°C while maintaining the pH of the reaction mixture from 7 to 9.

The silicas or aluminas which have surface hydroxyl groups are capable of exchanging the hydrogen atom in the hydroxyl groups for cations.

The average particle diameter of the metal oxide used as starting material is suitably from 5 to 20 microns, preferably from 10 to 20 microns. The metal oxide having surface hydroxyl groups, e.g. silica is suitably microporous having an average pore diameter of less than 30 Angstroms, preferably between 10 and 25 Angstroms. The metal oxide is preferably silica.

The preferred cations are calcium ($Ca^{2+}$) or zinc ($Zn^{2+}$) cations but other suitable cations may be cobalt ($Co^{2+}$), lead ($Pb^{2+}$) strontium ($Sr^{2+}$), lithium ($Li^+$), barium ($Ba^{2+}$) and magnesium ($Mg^{2+}$). The source of the cations may be their ionisable salts e.g. the hydroxides.

The ion-exchange reaction between the aqueous suspension of the starting metal oxide and the cation source, eg calcium hydroxide, is carried out at or below 15°C, preferably from 8-12°C.

The reaction mixture comprising an aqueous suspension of the metal oxide and a cation source, which is preferably silica and calcium hydroxide respectively, has to be stirred continuously. It is surprising that under these conditions a substantial portion of the silica may be ion-exchanged within 0.5 hours of the start of the reaction.

The cation-exchange reaction is suitably carried out by stirring the active metal oxide of appropriate particle size in water at or below 15°C to form a suspension and the pH monitored by a meter. The cation source, eg calcium hydroxide is then added slowly to the metal oxide suspended in water, whilst maintaining the pH from 7 to 9. A solution of a highly soluble salt (eg nitrate) of the cation is preferably added to the reactants to provide a high concentration of the cations in the reaction mixture to suppress the rapid dissolution of the cation source and thereby to control the rate of rise of the pH of the reaction. The pH needs to be high enough to absorb the hydrogen ion generated by the ion exchange but not so high as to dissolve the metal oxide. The uptake of metal cations can be followed by observing the fall of pH over a period of time following the addition of the compound. When the pH no longer falls after the addition of the base then exchange is complete.

The reaction products are then suitably washed with distilled water several times and then the ion-exchanged product is dried, preferably spray-dried.

Spray-drying is preferably carried out with an aqueous slurry of the ion-exchanged active metal oxide which has a solids content of less than 50% w/w, most preferably from 15-30% w/w. The spray-drying temperature is suitably above 100°C, preferably from 250-450°C such that the outlet temperature of the spray-dried material is from 60-140°C. In the case of calcium ion-exchanged silica the spray-dried product may have a calcium ion content of 3-7% w/w of the total product. The spray-dried product can be used in pigment formulation without the need for further grinding or other processing.

The present invention is further illustrated with reference to the following Example.

500 kg of silica having surface hydroxyl groups, a surface area of 700 $m^2$/g and at least 80% w/w of which had an average particle size below 20 microns and a pore diameter of 20-25 Angstroms was mixed by stirring with calcium hydroxide (60 kg) whilst maintaining the pH of the reaction mixture between 7 and 9 and the reaction temperature between 10 and 12°C. The stirring was continued for ten minutes and the product thereafter washed with distilled water. An aqueous suspension of the washed ion-exchanged material containing 20-30% w/w of solids was spraydried and eleven batches of ion-exchanged material were produced. These batches were analysed by X-ray fluorescence to determine the ion-exchangeable calcium content of the particles, as measured by the following test method:

Test Method

5g of the calcium exchanged silica were added to a solution of 150g of NaCl in 850 ml water. The mixture was agitated for 16 hours at 20°C. The mixture was then filtered and the particles washed and dried. The calcium content of the particles was determined by X-ray fluorescence and the amount of calcium in ion-exchangeable form calculated by subtracting this value from the calcium content as measured before the test.

The results of analysis of the eleven batches (some of which analyses were carried out in duplicate) were as follows:

| Batch No. | % w/w Ion exchangeable Calcium content |
|---|---|
| 1 | 3.0 |
|   | 3.2 |
| 2 | 3.0 |
| 3 | 3.3 |
| 4 | 2.3 |
|   | 2.3 |
| 5 | 3.2 |
| 6 | 3.2 |
|   | 3.1 |
| 7 | 3.1 |
|   | 2.5 |
| 8 | 3.4 |
|   | 3.15 |
| 9 | 3.15 |
| 10 | 3.35 |
|   | 3.15 |
| 11 | 3.4 |

Comparative Test (not according to the invention).

The process of the Example was repeated using a temperature of 20°C. The resultant product had only 2.7% w/w of calcium in the ion-exchangeable form, as measured by the above Test Method.

Claims:

1. A method of producing ion-exchanged metal oxides said process comprising reacting with agitation an aqueous suspension of a metal oxide selected from silica and alumina having surface hydroxyl groups and an average particle diameter of less than 25 microns with a source of corrosion inhibiting cations and recovering the ion-exchanged metal oxide characterised in that the reaction is carried out at or below 15°C while maintaining the pH of the reaction mixture from 7 to 9.

2. A method according to claim 1 wherein the metal oxide used as starting material has an average particle diameter from 5 to 20 microns and an average pore diameter below 30 Angstroms.

3. A method according to any one of the preceding claims wherein the cations are selected from calcium ($Ca^{2+}$), zinc ($Zn^{2+}$) cobalt ($Co^{2+}$), lead ($Pb^{2+}$) strontium ($Sr^{2+}$), lithium ($Li^{+}$), barium ($Ba^{2+}$) and magnesium ($Mg^{2+}$).

4. A method according to any one of claims 1 to 3 wherein the ion-exchange reaction is carried out from 8 to 12°C.

5. A method according to any one of the preceding claims wherein the metal oxide and a cation source are silica and calcium hydroxide respectively.

6. A method according to any one of the preceding claims wherein the reaction is carried out by stirring the metal oxide of appropriate particle size in water at or below 15°C and then adding the cation source to the active metal oxide suspended in water whilst maintaining the pH from 7 to 9.

6

7. A method according to any one of the preceding claims wherein a solution of a highly soluble salt of the cation is added to the reactants to provide a high concentration of the cations in the reaction mixture to suppress the rapid dissolution of the cation source and thereby to control the rate of rise of the pH of the reaction mixture.

8. A method according to any one of the preceding claims wherein the ion-exchanged metal oxide is spray-dried.

9. An ion-exchanged metal oxide according to claim 1 as hereinbefore illustrated with reference to the Example.

**European Patent Office**

**0122781**

Application number

**EUROPEAN SEARCH REPORT**

EP 84 30 2511

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| D,X | EP-A-0 046 057 (THE BRITISH PETROLEUM CO.)<br><br>* Claims 1-15; examples 1-4, especially lines 13-16 * | 1,3,5 6,7,8 9 | C 09 D 5/08<br>C 23 F 11/18<br>C 23 F 15/00<br>C 09 D 7/12<br>C 10 L 1/28<br>C 09 K 15/02 |

-----

TECHNICAL FIELDS
SEARCHED (Int. Cl. ³)

C 09 D
C 23 F
C 10 L
C 09 K

The present search report has been drawn up for all claims

| Place of search | Date of completion of the search | Examiner |
|---|---|---|
| THE HAGUE | 12-07-1984 | DE ROECK R.G. |